# EUROPEAN PATENT SPECIFICATION

(11) **EP 2 716 897 B1**
(45) Date of publication and mention of the grant of the patent: **14.03.2018**
(21) Application number: 11866991.0
(22) Date of filing: 01.06.2011
(51) Int. Cl.: F02D 29/02, B60W 30/18, B60W 10/06

(54) **VEHICLE CONTROL DEVICE**
FAHRZEUGSTEUERUNGSVORRICHTUNG
DISPOSITIF DE COMMANDE DE VÉHICULE

(43) Date of publication of application: 09.04.2014
(73) Proprietor: TOYOTA JIDOSHA KABUSHIKI KAISHA, Toyota-shi, Aichi-ken, 471-8571 (JP)
(72) Inventor: YAMAMOTO Kazuhiro, Toyota-shi, Aichi-ken, 471-8571 (JP); MORISE Masaru, Toyota-shi, Aichi-ken, 471-8571 (JP); WATANABE Hideo, Toyota-shi, Aichi-ken, 471-8571 (JP); OKUBO Tadanao, Toyota-shi, Aichi-ken, 471-8571 (JP)
(74) Representative: Kuhnen & Wacker
(86) International application number: PCT/JP2011/062607
(87) International publication number: WO 2012/164700

(56) References cited:
- DE-A1- 4 302 500
- JP-A- 7 224 695
- JP-A- 8 338 276
- JP-A- 2005 325 843
- JP-A- 2006 144 718

## Description

### [Technical Field]

The present invention relates to a vehicle control device in which an engine is connected to a manual transmission via a clutch.

### [Background Art]

JP2006144718 discloses the preamble of claim 1. In a vehicle including a manual transmission, so-called double clutch operations may be performed to adjust an engine rotation speed in speed shifting. In the double clutch operations, for example, the following seven operations (first to seventh operations) are performed sequentially within a prescribed time period.

First, a clutch pedal is stepped to put a clutch into a disengaged state (first operation), and a shift lever is moved to a neutral position to put the manual transmission into a neutral state (second operation). Next, the stepped clutch pedal is released to put the clutch into an engaged state (third operation), and in this state, the engine rotation speed is suitably increased by flapping an accelerator pedal (fourth operation). After adjusting the engine rotation speed, the clutch pedal is stepped again to put the clutch into the disengaged state (fifth operation), and the sift lever is moved to a shift position corresponding to a desirable speed stage (sixth operation). The stepped clutch pedal is released again to put the clutch into the engaged state (seventh operation), and thus, the speed change is completed. By performing the double clutch operations, it is possible to suppress a shifting shock during travel while reducing burden of a synchro-mesh mechanism and the like in the manual transmission.

Also, with a vehicle including a manual transmission, technology has been proposed in which fuel consumption is improved by stopping an engine when a clutch is in a disengaged state and furthermore the shift position is in a neutral state, and starting the engine when the shift position has changed from the neutral state to a travel position (See, for example, Patent Literature 1).

### [Prior Art References]

### [Patent Literatures]

[Patent Literature 1] JP H11-257119A
[Patent Literature 2] JP 2005-163762A

### [Summary of the Invention]

### [Problems to be Solved by the Invention]

However, in the vehicle that travels with the engine being stopped by carrying out the above-described engine stop, the operations to stop the engine (engine stop operations) may be the same as the first-third operations of the above-described double clutch operations. Thus, after completion of the third operation, the engine stop may be executed against a driver's intention to perform the double clutch operations. That is, since the engine stop operations cannot be distinguished from the double clutch operations, the speed change by the double clutch operations may be interrupted by executing the engine stop after completion of the third operation, thereby speed change responsiveness may be degraded.

The present invention was made in consideration of such circumstances, and an object thereof is to provide an vehicle control device capable of stopping the engine, during travel of the vehicle, without preventing the double clutch operation.

### [Means for Solving Problem]

The present invention has the following configuration for solving the above-described problem. That is, the present invention provides a vehicle control device that is applied to a vehicle on which are mounted an engine, a manual transmission and a clutch that is provided between the engine and the manual transmission and that is capable of switching a disengaged state and an engaged state. The vehicle control device includes an engine stop unit controlling an engine stop during travel of the vehicle, in which the engine stop unit performs the engine stop when a prescribed waiting time period elapses after sequential execution of an operation to put the clutch into the disengaged state, an operation to put a gear stage of the manual transmission into a neutral state and an operation to put the clutch into the engaged state.

In the above vehicle control device, the engine stop is not performed immediately after completion of the operation to put the clutch into the engaged state during travel of the vehicle, but is performed when the waiting time period elapses. Therefore, during travel of the vehicle, the engine can be stopped without preventing the double clutch operations for adjusting the engine rotation speed in the speed change. That is, the engine can be stopped by the engine stop unit independently from the speed change by the double clutch operations. Thus, the vehicle can travel with the engine being stopped. Furthermore, the speed change by the double clutch operations can be performed smoothly, without interruption, so as to ensure speed change responsiveness.

In the vehicle control device having the above configuration, preferably the engine stop unit suspends engine stop control if a suspending condition for suspending the engine stop control is satisfied before the elapse of the waiting time period. Here, the suspending condition may be a stepping operation of an accelerator pedal, or a stepping operation of a clutch pedal.

In the vehicle control device having the above configuration, if the suspending condition is satisfied before the elapse of waiting time period, the stop control of the engine is suspended. For example, if the accelerator pedal stepping operation is performed before the elapse of the waiting time period, such an accelerator operation is considered to be an adjusting operation of the engine rotation speed for the speed change, thus the engine stop control is suspended to not stop the engine. In this way, the engine stop control is suspended according to the driver's intention, thereby the speed change by the double clutch operations can be performed smoothly, without interruption, so as to ensure speed change responsiveness.

In the vehicle control device having the above configuration, when an operation speed to put the clutch into the disengaged state is high, the waiting time period is set to be longer than the waiting time period when the operation speed is low.

In the vehicle control device having the above configuration, as the operation speed to put the clutch into the disengaged state (e.g. to step the clutch pedal) is higher, there is a high possibility of the double clutch operations. For this reason, when the operation speed is high, the waiting time period is set to be longer than the waiting time period when the operation speed is low. Thus, the waiting time period is set based on the operation speed to put the clutch into the disengaged state, thereby, the engine stop operations are surely distinguished from the double clutch operations. Therefore, it is possible to reliably eliminate interruption, against the driver's intention, of the speed change using the "double clutch operations".

In the vehicle control device having the above configuration, preferably, when an operation speed to put the gear stage of the manual transmission into the neutral state is high, the waiting time period is set to be longer than the waiting time period when the operation speed is low.

In the vehicle control device having the above configuration, as the operation speed to put the gear stage of the manual transmission into the neutral state (e.g. to move the shift lever to the neutral position) is higher, there is a high possibility of the double clutch operations. For this reason, when the operation speed is high, the waiting time period is set to be longer than the waiting time period when the operation speed is low. Thus, the waiting time period is set based on the operation speed to put the gear stage of the manual transmission into the neutral state, thereby, the engine stop operations are surely distinguished from the double clutch operations. Therefore, it is possible to reliably eliminate interruption, against the driver's intention, of the speed change using the "double clutch operations".

In the vehicle control device having the above configuration, preferably, when an operation speed to put the clutch into the engaged state is high, the waiting time period is set to be longer than the waiting time period when the operation speed is low.

In the vehicle control device having the above configuration, as the operation speed to put the clutch into the engaged state (e.g. to release the stepped clutch pedal) is higher, there is a high possibility of the double clutch operations. For this reason, when the operation speed is high, the waiting time period is set to be longer than the waiting time period when the operation speed is low. Thus, the waiting time period is set based on the operation speed to put the clutch into the engaged state, thereby, the engine stop operations are surely distinguished from the double clutch operations. Therefore, it is possible to reliably eliminate interruption, against the driver's intention, of the speed change using the "double clutch operations".

In the vehicle control device having the above configuration, preferably, when a vehicle speed is low, the waiting time period is set to be longer than the waiting time period when the vehicle speed is high.

In the vehicle control device having the above configuration, as the vehicle speed is lower, there is a high possibility of down-shifting for re-acceleration, thus there is a high possibility of the double clutch operations. For this reason, when the vehicle speed is low, the waiting time period is set to be longer than the waiting time period when the vehicle speed is high. Thus, the waiting time period is set based on the vehicle speed, thereby, the engine stop operations are surely distinguished from the double clutch operations. Therefore, it is possible to reliably eliminate interruption, against the driver's intention, of the speed change using the "double clutch operations".

### [Effects of the Invention]

In the vehicle control device of the present invention, the engine stop is not performed immediately after completion of the operation to put the clutch into the engaged state during travel of the vehicle, but is performed when the waiting time period elapses. Therefore, during travel of the vehicle, the engine can be stopped without preventing the double clutch operations for adjusting the engine rotation speed in the speed change. That is, the engine can be stopped by the engine stop unit independently from the speed change using the double clutch operations. Thus, the vehicle can travel with the engine being stopped. Furthermore, the speed change by the double clutch operations can be performed smoothly, without interruption, so as to ensure speed change responsiveness.

### [Brief Description of Drawings]

[FIG. 1]

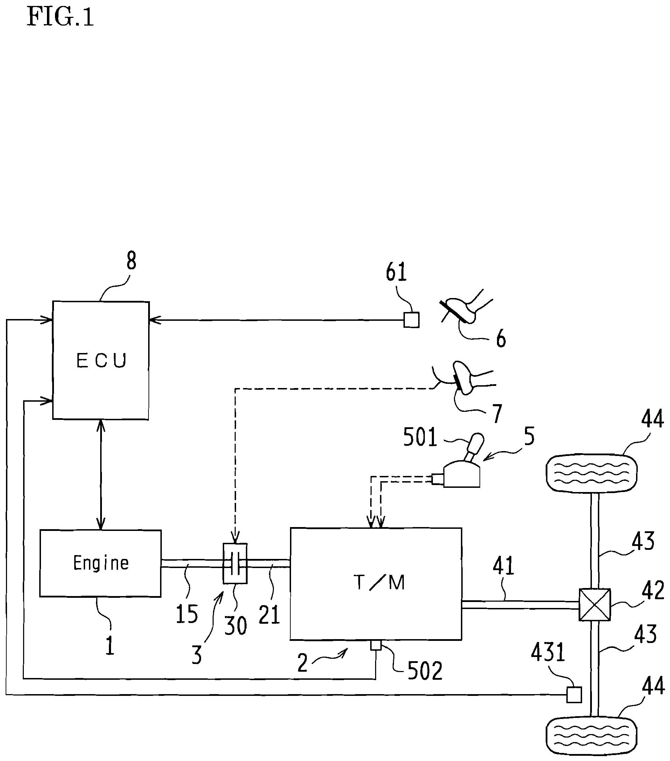

   FIG. 1 is a diagram showing a schematic configuration of a vehicle according to an embodiment of the present invention.
[FIG. 2]

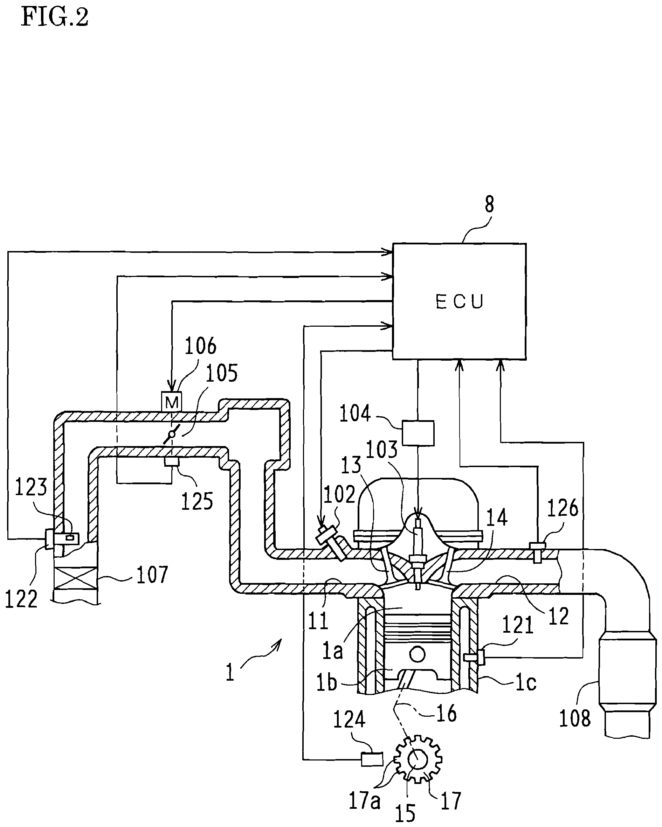

   FIG. 2 is a diagram showing a schematic configuration of an engine mounted on the vehicle of FIG. 1.
[FIG. 3]

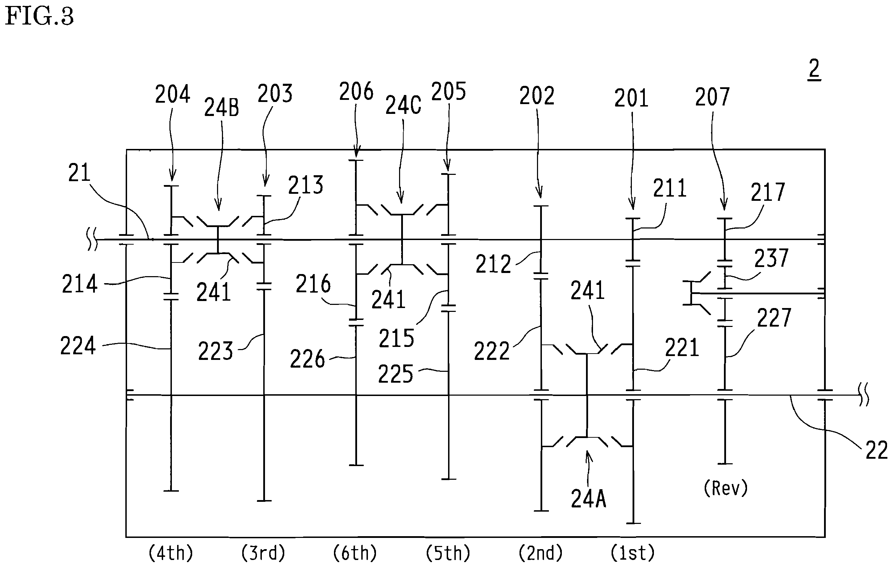

   FIG. 3 is a skeleton diagram showing a schematic configuration of a manual transmission mounted on the vehicle of FIG. 1.
[FIG. 4]

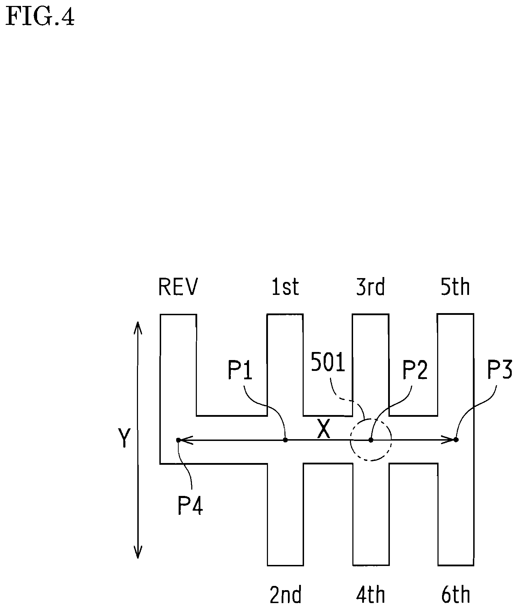

   FIG. 4 is a diagram schematically showing a shift pattern of the manual transmission mounted on the vehicle of FIG. 1.
[FIG. 5]

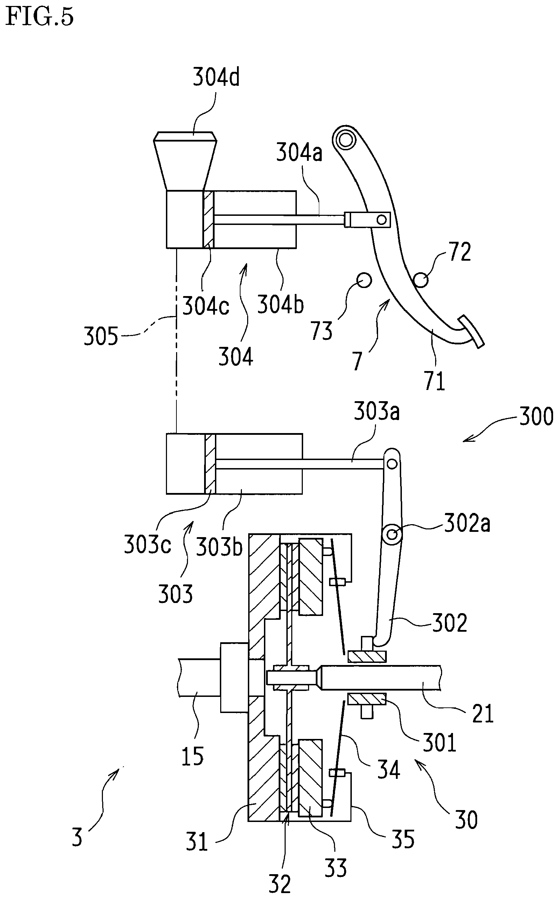

   FIG. 5 is a diagram showing a schematic configuration of a clutch device mounted on the vehicle of FIG. 1.
[FIG. 6]

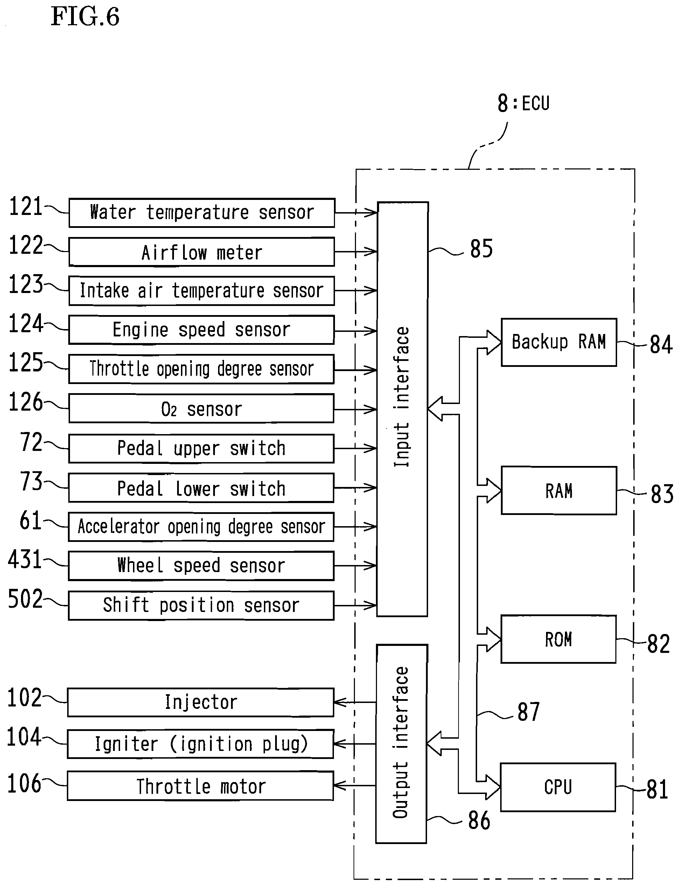

   FIG. 6 is a block diagram showing a configuration of a control system such as an ECU mounted on the vehicle of FIG. 1.
[FIG. 7]

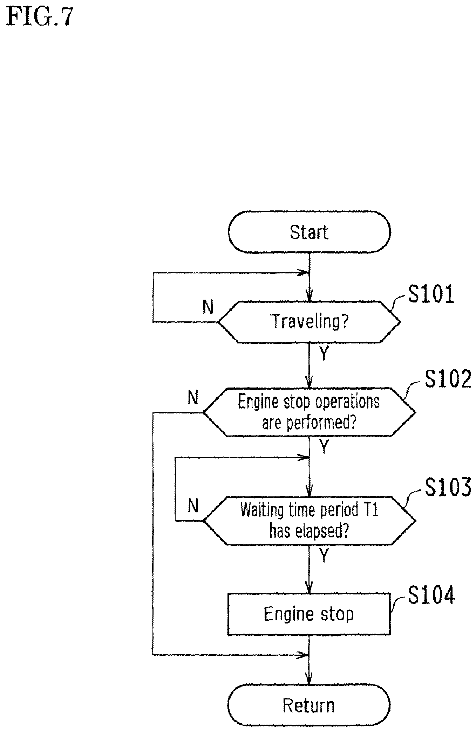

   FIG. 7 is a flowchart showing an example of engine stop control executed by the ECU.
[FIG. 8]

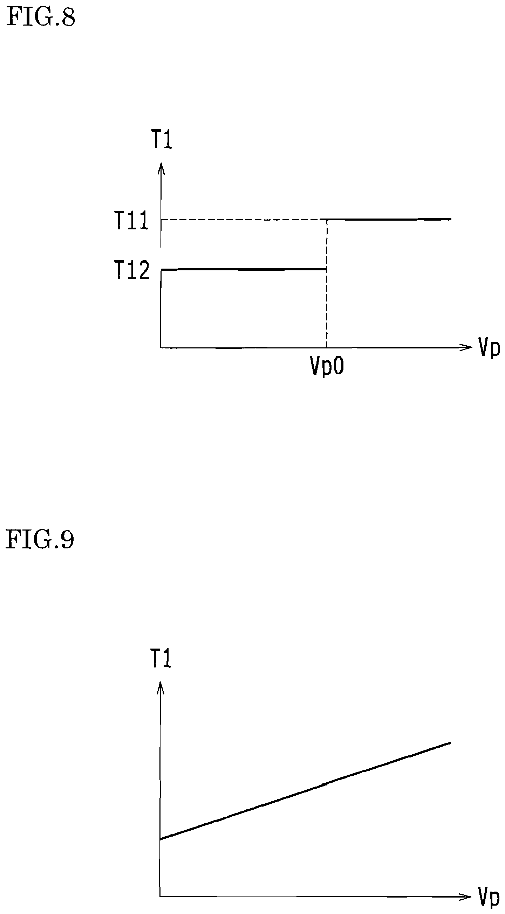

   FIG. 8 is a diagram showing an example of a relationship of an operation speed of a clutch pedal and a waiting time period.
[FIG. 9]
   FIG. 9 is a diagram showing another example of the relationship of the operation speed of a clutch pedal and the waiting time period.
[FIG. 10]

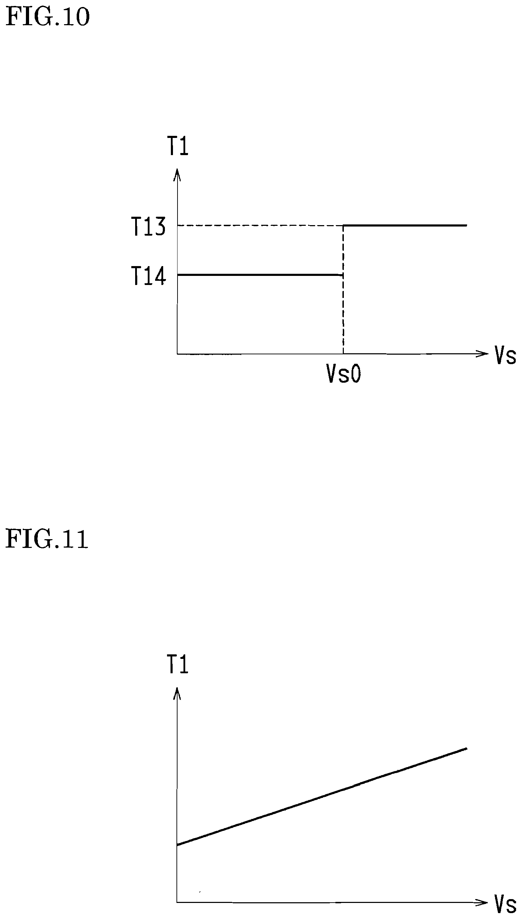

   FIG. 10 is a diagram showing an example of a relationship of an operation speed of a shift lever and the waiting time period.
[FIG. 11]
   FIG. 11 is a diagram showing another example of the relationship of the operation speed of the shift lever and the waiting time period.
[FIG. 12]

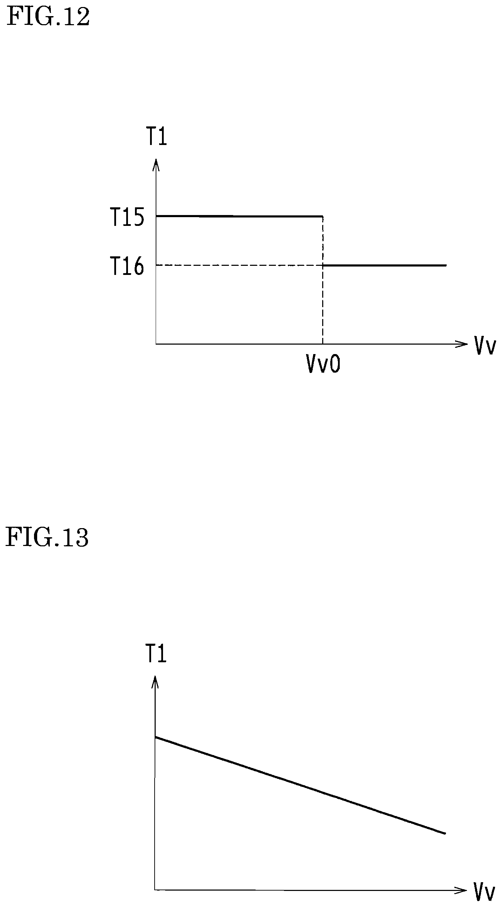

   FIG. 12 is a diagram showing an example of a relationship of a vehicle speed and the waiting time period.
[FIG. 13]
   FIG. 13 is a diagram showing another example of the relationship of the vehicle speed and the waiting time period.
[FIG. 14]

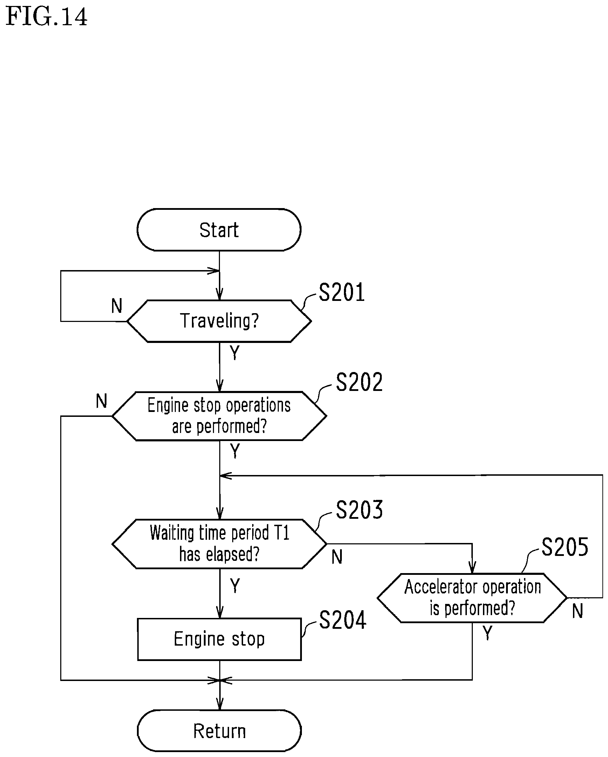

   FIG. 14 is a flowchart showing another example of the engine stop control.

### [Mode for Carrying Out the Invention]

Specific embodiments of the present invention will be described with reference to the accompanying drawings.

FIG. 1 is a diagram showing a schematic configuration of a vehicle according to an embodiment of the present invention.

The vehicle shown in FIG. 1 is an FR (front-engine rear-wheel-drive) vehicle that includes an engine 1 as a drive power source, a manual transmission 2, a clutch device 3, a shift device 5, an accelerator pedal 6, a clutch pedal 7 and the like. In the vehicle, a drive force (drive torque) generated by the engine 1 is input into the manual transmission 2 from a crankshaft 15, which is an output shaft of the engine 1, via the clutch device 3. The torque input into the manual transmission 2 is subjected to speed change at an appropriate speed change ratio by the manual transmission 2, and is output from an output shaft 22 (see FIG. 3). Then, the torque output from the output shaft 22 is transmitted to right and left rear wheels (driving wheels) 44, 44 via a propeller shaft 41, a differential gear 42 and axles 43, 43. Hereinafter, each component of the vehicle will be described.

### - Engine-

FIG. 2 is a diagram showing a schematic configuration of the engine 1 mounted on the vehicle of FIG. 1.

The engine 1 is, for example, a multi-cylinder gasoline engine, and includes, as shown in FIG. 2, a piston 1b that forms a combustion chamber 1a, and the crankshaft 15 as an output shaft. The piston 1b is coupled with the crankshaft 15 via a connecting rod 16. Reciprocating movement of the piston 1b is converted into rotational movement of the crankshaft 15 by the connecting rod 16.

The crankshaft 15 is provided with a signal rotor 17. On the outer periphery of the signal rotor 17, a plurality of the projections 17a is formed at regular intervals. In a vicinity of a side of the signal rotor 17, an engine speed sensor 124 is disposed. The engine speed sensor 124 is, for example, an electromagnetism pickup, and generates pulse signals (output pulses) in accordance with the number of the projections 17a that pass over a position opposite to the engine speed sensor 124 as the crankshaft 15 is rotated. Also, a cylinder block 1c of the engine 1 includes a water temperature sensor 121 that detects an engine water temperature (cooling water temperature).

An ignition plug 103 is disposed in the combustion chamber 1a of the engine 1. An ignition timing of the ignition plug 103 is adjusted by an igniter 104. The igniter 104 is controlled by an ECU 8.

To the combustion chamber 1a, an intake path 11 and an exhaust path 12 are connected. An intake valve 13 is provided between the intake path 11 and the combustion chamber 1a. The intake valve 13 is driven to open and close so as to communicate and disconnect between the intake path 11 and the combustion chamber 1a. An exhaust valve 14 is provided between the exhaust path 12 and the combustion chamber 1a. The exhaust valve 14 is driven to open and close so as to communicate and disconnect between the exhaust path 12 and the combustion chamber 1a. The open/close drive of the intake valve 13 and the exhaust valve 14 is performed by respective rotations of an intake cam shaft and an exhaust cam shaft (not shown) to which the rotation of the crankshaft 15 is transmitted.

The intake path 11 is provided with an air cleaner 107, an airflow meter 122, an intake air temperature sensor 123, an electronically controlled throttle valve 105 that adjusts an amount of intake air of the engine 1, and the like. The exhaust path 12 is provided with an O₂ sensor 127 that detects an oxygen concentration in an exhaust gas, a three-way catalyst 108, and the like.

The throttle valve 105 is driven by a throttle motor 106. Thus, an opening degree of the throttle valve 105 (throttle opening degree) is adjusted, and the amount of intake air of the engine 1 is adjusted according to the throttle opening degree. The throttle opening degree is detected by a throttle opening degree sensor 125. The throttle motor 106 is driven and controlled by the ECU 8.

Furthermore, the intake path 11 is provided with an injector (fuel injection valve) 102. The injector 102 is supplied with fuel having a predetermined pressure from a fuel tank (not shown) via a fuel pump, and then the fuel is injected to the intake path 11 by the injector 102. The fuel injected by the injector 102 is mixed with the intake air into air-fuel mixture gas, and introduced into the combustion chamber 1a of the engine 1. The mixture gas (fuel and air) introduced into the combustion chamber 1a is ignited by the ignition plug 103 for combustion and explosion. The combustion and explosion of the mixture gas in the combustion chamber 1a causes reciprocating movement of the piston 1b, thereby the crankshaft 15 is driven to rotate.

### -Manual Transmission-

FIG. 3 is a skeleton diagram showing a schematic configuration of the manual transmission 2 mounted on the vehicle of FIG. 1.

The manual transmission 2 is a well-known synchro-mesh manual transmission (for example, six forward shift stages and one backward shift stage). As shown in FIG. 3, an input shaft 21 is coupled with the crankshaft 15 of the engine 1 via the clutch device 3. Also, the output shaft 22 is coupled with the propeller shaft 41 (see FIG. 1). By this manual transmission 2, the drive torque from the engine 1 is subjected to speed change at a prescribed speed change ratio, and then transmitted to the rear wheel 44, 44 side.

The manual transmission 2 includes six forward shift stages 201 to 206 that differ in a speed change ratio (gear ratio), one backward shift stage 207, a synchro-mesh mechanism 24A for the first-second speed shift, a synchro-mesh mechanism 24B for the third-fourth speed shift, a synchro-mesh mechanism 24C for the fifth-sixth speed shift and the like.

The forward shift gear stages 201 to 206 are formed of combination of respective drive gears 211 to 216 mounted on the input shaft 21 side and respective driven gears 221 to 226 mounted on the output shaft 22 side. The drive gears 211 to 216 mesh respectively with the driven gears 221 to 226.

The respective drive gears 211 and 212 of the first speed and the second speed are mounted on the input shaft 21 in a manner integrally rotatable therewith. On the other hand, the respective drive gears 213 to 216 of the third to sixth speeds are relatively rotatably mounted on the input shaft 21 via respective bearings (for example, cage and roller). Furthermore, the respective driven gears 221 and 222 of the first speed and the second speed are relatively rotatably mounted on the output shaft 22 via respective bearings (for example, cage and roller). On the other hand, the respective driven gears 223 to 226 are mounted on the output shaft 22 in a manner integrally rotatable therewith. The backward shift gear stage 207 includes a reverse drive gear 217, a reverse driven gear 227, a reverse idler gear 237 and the like.

The synchro-mesh mechanisms 24A, 24B and 24C each have a well-known configuration, and detailed description thereof is omitted. The synchro-mesh mechanisms 24A, 24B and 24C each have substantially the same configuration, i.e. have a sleeve 241, a synchronizer ring, a clutch hub and the like, which are not shown in detail in the figure. The sleeve 241 is slid in the axial direction by a shift fork (not shown) of the manual transmission 2. The shift fork is operated so as to establish a shift stage corresponding to a shift position selected by manipulating a shift lever 501 (see FIG. 1) of the shift device 5. The shift lever 501 is mechanically coupled with the shift fork via cables, links and the like. The shift position selected by the shift lever 501 is detected by a shift position sensor 502 (see FIG. 1) provided in the manual transmission 2. The shift position sensor 502 may be provided in a vicinity of the shift lever 501.

Now, description will be given on a shift pattern (shift gate shape) of a shift gate that is disposed on a floor in a vehicle cabin and configured to guide a movement of the shift lever 501 of the shift device 5.

FIG. 4 schematically shows the shift pattern of the manual transmission 2 having six forward shift stages and one backward shift stage. In this embodiment, the shift lever 501 can perform select manipulation in a direction indicated by an arrow X shown in FIG. 4 and shift manipulation in a direction indicated by an arrow Y orthogonal to the direction of the select manipulation.

In the select manipulation direction, a first-speed and second-speed select position P1, a third-speed and fourth-speed select position P2, a fifth-speed and sixth-speed select position P3 and a reverse select position P4 are arranged in a row.

By the shift manipulation (manipulation in the direction indicated by the arrow Y) at the first-speed and second-speed select position P1, the shift lever 501 can be moved to a first speed position 1st or a second speed position 2nd. When the shift lever 501 is moved to the first speed position 1st, the sleeve 241 of the synchro-mesh mechanism 24A for the first-second speed change of the manual transmission 2 is operated to an establishment side of the first speed (the right side in FIG. 3), thus establishing the first speed stage. Also, when the shift lever 501 is moved to the second speed position 2nd, the sleeve 241 of the synchro-mesh mechanism 24A for the first-second speed change is operated to an establishment side of the second speed (the left side in FIG. 3), thus establishing the second speed stage.

Similarly, by the shift manipulation at the third-speed and fourth-speed select position P2, the shift lever 501 can be moved to a third speed position 3rd or a fourth speed position 4th. When the shift lever 501 is moved to the third speed position 3rd, the sleeve 241 of the synchro-mesh mechanism 24B for the third-fourth speed change of the manual transmission 2 is operated to an establishment side of the third speed (the right side in FIG. 3), thus establishing the third speed stage. Also, when the shift lever 501 is moved to the fourth speed position 4th, the sleeve 241 of the synchro-mesh mechanism 24B for the third-fourth speed change is operated to an establishment side of the fourth speed (the left side in FIG. 3), thus establishing the fourth speed stage.

Similarly, by the shift manipulation at the fifth-speed and sixth-speed select position P3, the shift lever 501 can be moved to a fifth speed position 5th or a sixth speed position 6th. When the shift lever 501 is moved to the fifth speed position 5th, the sleeve 241 of the synchro-mesh mechanism 24C for the fifth-sixth speed change of the manual transmission 2 is operated to an establishment side of the fifth speed (the right side in FIG. 3), thus establishing the fifth speed stage. Also, when the shift lever 501 is moved to the sixth speed position 6th, the sleeve 241 of the synchro-mesh mechanism 24C for the fifth-sixth speed change is operated to an establishment side of the sixth speed (the left side in FIG. 3), thus establishing the sixth speed stage.

Furthermore, by the shift manipulation at the reverse select position P4, the shift lever 501 can be moved to a reverse position REV. When the shift lever 501 is moved to the reverse position REV, the synchro-mesh mechanisms 24A, 24B and 24C of the manual transmission 2 are each turned into a neutral state, and the reverse idler gear 237 of the manual transmission 2 is actuated, thus establishing the backward shift stage.

In this embodiment, the third-speed and fourth-speed select position P2 serves as the neutral position. When the shift lever 501 is moved to the neutral position P2, the synchro-mesh mechanisms 24A, 24B and 24C of the manual transmission 2 are each turned into a neutral state, thus the manual transmission 2 is turned into a neutral state in which no torque is transmitted between the input shaft 21 and the output shaft 22.

### -Clutch Device-

FIG. 5 is a diagram showing a schematic configuration of the clutch device 3 mounted on the vehicle of FIG. 1.

As shown in FIG. 5, the clutch device 3 includes a clutch mechanism 30 (simply referred to as "clutch 30") and a clutch actuating device 300 that actuates the clutch 30 in response to a stepping operation of the clutch pedal 7.

The clutch 30 is configured as a dry-type single plate friction clutch, and is disposed so as to be interposed between the crankshaft 15 and the input shaft 21 of the manual transmission 2. It is possible to adopt the clutch 30 other than the dry-type single plate friction clutch.

Specifically, the clutch 30 includes a flywheel 31, a clutch disc 32, a pressure plate 33, a diaphragm spring 34 and a clutch cover 35. The flywheel 31 and the clutch cover 35 are integrally rotatably attached to the crankshaft 15 that serves as the input shaft of the clutch 30. The clutch disc 32 is splined to the input shaft 21 of the manual transmission 2 as the output shaft of the cultch 30. For this reason, the clutch disc 32 is integrally rotated with the input shaft 21, while it is slidable in the axial direction (left and right direction in FIG. 5). The pressure plate 33 is provided between the clutch disc 32 and the clutch cover 35. The pressure plate 33 is biased toward the flywheel 31 by the outer periphery portion of the diaphragm spring 34.

The clutch actuating device 300 includes a release bearing 301, a release fork 302, a clutch release cylinder 303, a clutch master cylinder 304 and the like. The release bearing 301 is slidably attached to the input shaft 21 in the axial direction. In a vicinity of the release bearing 301, the release fork 302 is rotatably supported by a shaft 302a, one end portion (lower end portion in FIG. 5) of which makes contact with the release bearing 301. The other end portion (upper end portion in FIG. 5) of the release fork 302 is coupled with one end portion (right end portion in FIG. 5) of a rod 303a of the clutch release cylinder 303.

The clutch release cylinder 303 has a configuration in which a piston 303c and the like are incorporated in a cylinder body 303b. The piston 303c is coupled with the other end portion (left end portion in FIG. 5) of the rod 303a. The clutch release cylinder 303 is coupled with the clutch master cylinder 304 via an oil pressure pipe 305.

Similarly to the clutch release cylinder 303, the clutch master cylinder 304 has a configuration in which a piston 304c and the like are incorporated in a cylinder body 304b. The piston 304c is coupled with one end portion (left end portion in FIG. 5) of a rod 304a. The other end portion (right end portion in FIG. 5) of the rod 304a is coupled with an intermediate portion of a pedal lever 71 of the clutch pedal 7. On the upper portion of the cylinder body 304b, a reserve tank 304d is disposed. The reserve tank 304d supplies a clutch fluid (oil) serving as a working fluid into the cylinder body 304b.

The clutch master cylinder 304 generates oil pressure by movement of the piston 304c in the cylinder body 304b upon receipt of operation force by a stepping operation of the clutch pedal 7 by a driver. The oil pressure generated by the clutch master cylinder 304 is transmitted through oil in the oil pressure pipe 305 to the clutch release cylinder 303.

In the clutch device 3, the release fork 302 is actuated according to the oil pressure in the clutch release cylinder 303, thereby engaging and disengaging the clutch 30.

Specifically, in the state (clutch engaged state) shown in FIG. 5, when a stepping amount of the clutch pedal 7 becomes large, oil is supplied from the clutch master cylinder 304 to the clutch release cylinder 303, whereby the oil pressure in the clutch release cylinder 303 rises. Then, the piston 303c and the rod 303a are moved rightward in FIG. 5, and the release fork 302 is rotated (in the clockwise in FIG. 5) about the shaft 302a so that the release bearing 301 is pressed to the flywheel 31 side. Then, movement of the release bearing 301 in the above direction makes a center portion of the diaphragm spring 34 be elastically deformed in the same direction. This reduces a biasing force toward the pressure plate 33 by the diaphragm spring 34. This results in a half-clutch state, where the pressure plate 33, the clutch disc 32 and the flywheel 31 are engaged while being slipped.

In this half-clutch state, when the release bearing 301 is further moved toward the flywheel 31 side, and the biasing force toward the pressure plate 33 by the diaphragm spring 34 is further reduced, the pressure plate 33, the clutch disc 32 and the flywheel 31 are spaced apart from each other so that the clutch 30 is put into a disengaged (released) state (clutch disengaged state). In this clutch disengaged state, torque transmission from the engine 1 to the manual transmission 2 is cut off.

On the other hand, in the clutch disengaged state, when the stepping of the clutch pedal 7 is released to reduce the stepping amount of the clutch pedal 7, the oil is brought back from the clutch release cylinder 303 to the clutch master cylinder 304, whereby the oil pressure in the clutch release cylinder 303 drops. Then, the piston 303c and the rod 303a are moved leftward in FIG. 5, and the release fork 302 is rotated (in the counterclockwise in FIG. 5) about the shaft 302a, thus the release bearing 301 is moved in the direction away from the flywheel 31. This movement increases the biasing force toward the pressure plate 33 by the outer periphery portion of the diagram spring 34. This results in an increase in frictional force between the pressure plate 33 and the clutch disc 32, and between the clutch disc 32 and the flywheel 31. The clutch 30 is put into a connected (engaged) state (clutch engaged state) by the frictional force. In this clutch engaged state, the pressure plate 33, the clutch disc 32 and the flywheel 31 are integrally rotated. Accordingly, the crankshaft 15 and the input shaft 21 are integrally rotated, thus torque is transmitted between the engine 1 and the manual transmission 2.

Adjacent to the pedal lever 71 of the clutch pedal 7, a pedal upper switch 72 and a pedal lower switch 73 are disposed. The pedal upper switch 72 and the pedal lower switch 73 detect whether or not the stepping amount of the clutch pedal 7 by the driver reaches a prescribed amount. Specifically, the pedal upper switch 72 outputs a signal "ON" if the stepping of the clutch pedal 7 is released until it reaches the position where the clutch 30 is put into the engaged state. The pedal lower switch 73 outputs a signal "ON" if the clutch pedal 7 is stepped until it reaches the position where the clutch 30 is put into the disengaged state.

### -Control System-

In the vehicle with the above configuration, the ECU 8 performs various kinds of control for the engine 1 and the like. The ECU 8 includes, as shown in FIG. 6, a CPU 81, a ROM 82, a RAM 83, a backup RAM 84, an input interface 85, an output interface 86 and the like.

The ROM 82 stores various control programs, maps referred to at the time of executing those various control programs, and the like. The CPU 81 executes calculation processing based on the various control programs and the maps stored in the ROM 82. The RAM 83 is a memory that temporary stores caluculation results in the CPU 81 and data input from various sensors, various switches, and the like. The backup RAM 84 is a non-volatile memory that stores data and the like that should be stored when the engine 1 is stopped. The CPU 81, the ROM 82, the RAM 83 and the backup RAM 84 are connected to each other via a bus 87, and also connected to the input interface 85 and the output interface 86.

The input interface 85 is connected to the pedal upper switch 72, the pedal lower switch 73, the water temperature sensor 121, the airflow meter 122, the intake air temperature sensor 123, the engine speed sensor 124, the throttle opening degree sensor 125, the O₂ sensor 126, and the like. Also, the input interface 85 is connected to an accelerator opening degree sensor 61, a wheel speed sensor 431 and the shift position sensor 502 and the like. The accelerator opening degree sensor 61 is provided adjacent to the accelerator pedal 6 (see FIG. 1) and detects the stepping amount (accelerator opening degree) of the accelerator pedal 6 by a driver. The wheel speed sensor 431 is provided adjacent to the axle 43 (see FIG. 1) and detects the vehicle speed. The shift position sensor 502 detects a shift position selected by the shift lever 501 (see FIG. 1) of the shift device 5.

The output interface 86 is connected to the injector 102, the igniter 104 of the ignition plug 103, the throttle motor 106 of the throttle valve 105, and the like. The ECU 8 executes, based on outputs from the above various sensors and switches, various kinds of control for the vehicle including drive control (fuel injection control) for the injector 102, ignition timing control for the ignition plug 103 and drive control for the throttle motor 106 of the throttle valve 105. Also, the ECU 8 executes the following engine stop control.

### -Engine Stop Control-

This embodiment is characterized in that, during travel of the vehicle, in a case where a prescribed waiting time period T1 is elapsed after a prescribed "engine stop operations" have been performed, the engine 1 is stopped. Before describing the stop control of the engine 1 (engine stop control) during travel of the vehicle, the "engine stop operations" during travel of the vehicle will be described.

In the "engine stop operations", a first operation to a third operation as described below are sequentially performed within a prescribed time period.

The first operation: putting the clutch 30 into the disengaged state (OFF);
The second operation: putting the gear stage of the manual transmission 2 into the neutral state (N); and
The third operation: putting the clutch 30 into the engaged state (ON). In order to determine operations to be the engine stop operations, it is necessary that a time period from completion of the first operation to a start of the second operation be within a prescribed first time period (for example, 5 seconds), and a time period from completion of the second operation to a start of the third operation be within a prescribed second time period (for example, 5 seconds).

The first operation is an operation stepping the clutch pedal 7 by a driver. It is possible to determine whether or not the first operation is completed based on output from the pedal lower switch 73. Specifically, it is determined that the first operation is completed when the signal "ON" is output from the pedal lower switch 73. On the other hand, it is determined that the first operation is not completed when the signal "OFF" is output from the pedal lower switch 73.

The second operation is an operation moving (returning) the shift lever 501 of the shift device 5, by the driver, from any position of the first speed 1st to sixth speed 6th to the neutral position P2. It is possible to determine whether or not the second operation is completed based on output from the shift position sensor 502.

The third operation is an operation releasing the stepped clutch pedal 7 by the driver. It is possible to determine whether or not the third operation is completed based on output from the pedal upper switch 72. Specifically, it is determined that the third operation is completed when the signal "ON" is output from the pedal upper switch 72. On the other hand, it is determined that the third operation is not completed when the signal "OFF" is output from the pedal upper switch 72.

In this way, in the "engine stop operations", the above first operation to the third operation are sequentially operated, thereby the gear stage of the manual transmission 2 is turned into the neutral state and the engine 1 is stopped while the clutch 30 is engaged. Thus, the engine 1 can be stopped in a suitable state without affecting the travel of the vehicle. As the engine 1 is stopped while the clutch 30 is engaged, the driver can maintain such a state (the state in which the engine 1 is being stopped) with his/her foot being away from the clutch pedal 7, thus burden with respect to driving operation by the driver can be reduced.

Next, the stop control of the engine 1 (engine stop control) during travel of the vehicle will be described in detail with reference to the flowchart of FIG. 7. The control routine indicated in FIG. 7 is repeatedly performed at a prescribed time period (for example, several milliseconds to several tens of milliseconds) by the ECU 8.

In step S101, it is determined whether or not the vehicle is traveling. This determination can be performed based on output from the wheel speed sensor 431. If the result in step S101 is YES, the processing advances to step S102. If the result in step S101 is NO, the processing is set to a standby state.

In step S102, it is determined whether or not the above-described "engine stop operations" are performed during travel of the vehicle. In this case, it is determined whether or not the first to third operations are performed sequentially within the prescribed time period. If the result in step S102 is YES, the processing advances to step S103. If the result in step S102 is NO, the processing returns.

In step S103, it is determined whether or not the prescribed waiting time period T1 elapses after it is determined that the "engine stop operations" are performed in step S102. That is, a timer of the ECU 8 is started at the time of completion of the third operation of the "engine stop operations" to measure an elapsed time from the point when the third operation is completed. Then, it is determined whether or not the measured time by the timer reaches the waiting time period T1.

If the result in step S103 is YES, the processing advances to step S104. If the result in step S103 is NO, the processing is set to the standby state.

In step S104, the engine 1 is stopped. After that, the timer of the ECU 8 is reset and the control routine is terminated. Note that the travel of the vehicle with the engine 1 being stopped is continued until specified operations (for example, stepping of the accelerator pedal 6, stepping of the clutch pedal 7 and the like) are performed to cancel the stopped state of the engine 1.

In this embodiment, during travel of the vehicle, the engine 1 is not stopped immediately after the "engine stop operations" are performed, but is stopped after the waiting time period T1 elapses. Therefore, in this embodiment, during travel of the vehicle, the stop of the engine 1 can be performed without preventing the "double clutch operations" to adjust, in the speed change, the rotation speed of the engine 1 to the rotation speed after the speed change. The following is description concerning this point.

First, description will be given on the "double clutch operations". In the double clutch operations, for example, the following first to seventh operations are performed sequentially within a prescribed time period.

The first operation: putting the clutch 30 into the disengaged state (OFF);
The second operation: putting the gear stage of the manual transmission 2 into the neutral state (N);
The third operation: putting the clutch 30 into the engaged state (ON); The fourth operation: adjusting the rotation speed of the engine 1 by the accelerator pedal 6;
The fifth operation: putting again the clutch 30 into the disengaged state (OFF);

The sixth operation: operating the shift lever 501 to a shift position corresponding to a desirable speed stage; and

The seventh operation: putting again the clutch 30 into the engaged state (ON).

Thus, the first to third operations of the "double clutch operations" are the same as those of the "engine stop operations" as described above. For this reason, during travel of the vehicle, if the engine 1 is stopped immediately after completion of the above first to third operations, the engine 1 may be stopped against the driver's intention of performing the "double clutch operations" and may result in interruption of the speed change operations of the "double clutch operations". However, in this embodiment, during travel of the vehicle, the engine 1 is stopped after elapse of the waiting time period T1 following completion of the third operation. Thus, it is possible to distinguish the "engine stop operations" from the "double clutch operations". Since the engine 1 can be stopped independently from the speed change operations of the "double clutch operations", the vehicle can travel with the engine 1 being stopped. Furthermore, the speed change by the "double clutch operations" can be performed smoothly, without interruption, so as to ensure speed change responsiveness.

The waiting time period T1 is set so as to distinguish the "engine stop operations" from the "double clutch operations". Specifically, the "double clutch operations" are operations to adjust the rotation speed of the engine 1 in the speed change. In view of the speed change responsiveness, the above first to seventh operations are generally performed within a relatively short time period. Therefore, in the "double clutch operations", it is likely that the fourth operation is performed immediately after completion of the third operation. Thus, in this embodiment, the waiting time period T1 is set to a time period (for example, 0.5 second) in which there is no possibility of performing the fourth operation of the "double clutch operations" after completion of the third operation in view of the speed change responsiveness. In other words, the waiting time period T1 is set to the time period in which, if the fourth operation of the "double clutch operations" is performed when the waiting time period T1 elapses after completion of the third operation, the speed change responsiveness is impaired. That is, after completion of the third operation, the engine 1 is not stopped within the waiting time period T1 in which there is possibility of performing the fourth operation of the "double clutch operations", so that the "engine stop operations" are surely distinguished from the "double clutch operations".

In order that the "engine stop operations" may be surely distinguished from the "double clutch operations", it is preferable to set the waiting time period T1 as follows. Description will be given with specific examples (1) to (3).
(1) When an operation speed of the clutch pedal 7 by the driver is high, it is preferable to set the waiting time period T1 longer than that when the operation speed of the clutch pedal 7 is low.
   That is, as the operation speed of the clutch pedal 7 by the driver is higher, there is a high possibility of the "double clutch operations". For this reason, if the operation speed of stepping the clutch pedal 7 is high (i.e. the operation speed of the first operation is high), the waiting time period T1 is set to be longer than that when the operation speed is low.
   The operation speed of the stepping operation of the clutch pedal 7 can be calculated based on outputs of the pedal upper switch 72 and the pedal lower switch 73. In this case, the operation speed of the stepping operation of the clutch pedal 7 is calculated based on a required time from the point when the signal "OFF" is output from the pedal upper switch 72 (the point when the signal "ON" is switched to "OFF") to the point when the signal "ON" is output from the pedal lower switch 73 (the point when the signal "OFF" is switched to "ON").
   For example, the waiting time period T1 can be set according to the operation speed Vp of the clutch pedal 7 using a map shown in FIG. 8. Specifically, if the operation speed Vp of the clutch pedal 7 is higher than a prescribed threshold value Vp0, the waiting time period T1 is set to T11. In contrast, if the operation speed Vp of the clutch pedal 7 is equal to or less than the threshold value Vp0, the waiting time period T1 is set to T12 that is shorter than T11. Or, the waiting time period T1 can be set to be proportionally longer as the operation speed Vp of the clutch pedal 7 is higher, using a map shown in FIG. 9. The maps in FIGS. 8 and 9, and the threshold value Vp0 are preliminarily stored in the ROM 82 of the ECU 8.
   When the operation speed of releasing operation of the stepped clutch pedal 7 is high (i.e. the operation speed of the third operation is high), the waiting time period T1 may also be set to be longer than that when the operation speed is low. In this case, the waiting time period T1 can be set using maps similar to those in FIGS. 8 and 9. Also, the operation speed of the releasing operation of the stepped clutch pedal 7 can be calculated based on a required time from the point when the signal "OFF" is output from the pedal lower switch 73 (the point when the signal "ON" is switched to "OFF") to the point when the signal "ON" is output from the pedal upper switch 72 (the point when the signal "OFF" is switched to "ON").
(2) When an operation speed of the shift lever 501 of the shift device 5 by the driver is high, it is preferable to set the waiting time period T1 longer than that when the operation speed of the shift lever 501 is low.
   That is, as the operation speed of the shift lever 501 by the driver is higher, there is a high possibility of the "double clutch operations". For this reason, if the operation speed of moving the shift lever 501 from any position of the first speed 1st to sixth speed 6th to the neutral position P2 is high (i.e. the operation speed of the second operation is high), the waiting time period T1 is set to be longer than that when the operation speed is low. The operation speed of the shift lever 501 can be calculated based on output of the shift position sensor 502.
   For example, the waiting time period T1 can be set according to the operation speed Vs of the shift lever 501 using a map shown in FIG. 10. Specifically, if the operation speed Vs of the shift lever 501 is higher than a prescribed threshold value Vs0, the waiting time period T1 is set to T13. In contrast, if the operation speed Vs of the shift lever 501 is equal to or less than the threshold value Vs0, the waiting time period T1 is set to T14 that is shorter than T13. Or, the waiting time period T1 can be set to be proportionally longer as the operation speed Vp of the clutch pedal 7 is higher, using a map shown in FIG. 11. The maps in FIGS. 10 and 11, and the threshold value Vs0 are preliminarily stored in the ROM 82 of the ECU 8.
(3) When the vehicle speed is low, it is preferable to set the waiting time period T1 longer than that when the vehicle speed is high.

That is, as the vehicle speed is lower, there is a high possibility of down-shifting for re-acceleration, thus there is a high possibility of the "double clutch operations". For this reason, if the vehicle speed is low, the waiting time period T1 is set to be longer than that when the vehicle speed is high. The vehicle speed can be calculated based on output of the wheel speed sensor 431. In this case, it is possible to use the vehicle speed at the time when the shift lever 501 is moved to the neutral position P2, i.e. the vehicle speed at the time of completion of the second operation.

For example, the waiting time period T1 can be set according to the vehicle speed Vv using a map shown in FIG. 12. Specifically, if the vehicle speed Vv is lower than a prescribed threshold value Vv0, the waiting time period T1 is set to T15. In contrast, if the vehicle speed Vv is equal to or more than the threshold value Vv0, the waiting time period T1 is set to T16 that is shorter than T15. Or, the waiting time period T1 can be set to be proportionally shorter as the vehicle speed Vv is higher, using a map shown in FIG. 13. The maps in FIGS. 12 and 13, and the threshold value Vv0 are preliminarily stored in the ROM 82 of the ECU 8.

As above-described examples (1) to (3), the waiting time period T1 is set based on the operation speed of the clutch pedal 7, the operation speed of the shift lever 501, or the vehicle speed. Thus, the "engine stop operations" are surely distinguished from the "double clutch operations". Therefore, it is possible to reliably eliminate interruption, against the driver's intention, of the speed change using the "double clutch operations". Note that the waiting time period T1 can be set by combination of the plurality of examples (1) to (3).

### -Other Embodiments-

The present invention should not be limited to the above-described embodiment.

During travel of the vehicle, if a specified suspending condition for suspending the engine stop control is satisfied before elapse of the waiting time period T1 following completion of the third operation (operation putting the clutch 30 into the engaged state), it is preferable to suspend the engine stop control. Here, the suspending condition can be, for example, the stepping operation of the accelerator pedal 6, or the stepping operation of the clutch pedal 7.

One example of the above control will be described with reference to the flowchart of FIG. 14. In this example, the suspending condition is the stepping operation of the accelerator pedal 6.

In steps S201 to S204 in the flowchart of FIG. 14, the processing similar to steps S101 to S104 in the flowchart of FIG. 7 of the above-described embodiment is performed.

In this example, if the result in step S203 is NO in the flowchart of FIG. 14, to be specific, if a measured time by the timer of the ECU 8 has not reached the waiting time period T1, the processing advances to step S205.

In step S205, it is determined whether or not the stepping operation of the accelerator pedal 6 has been performed. That is, it is determined whether or not the suspending condition has been satisfied. This determination can be performed based on output of the accelerator opening degree sensor 61 that detects the amount of stepping of the accelerator pedal.

If the result in step S205 is NO, the processing returns to step S203. If the waiting time period T1 elapses after completion of the third operation without accelerator operation, the engine 1 is stopped in step S204.

If the result in step S205 is YES, the control routine is terminated without stopping the engine 1 in step S204. If the accelerator is operated before elapse of the waiting time period T1 following the completion of the third operation, the stop operation of the engine 1 is not performed in step S204. Thus, the accelerator operation before the elapse of the waiting time period T1 is determined to be an adjusting operation of the rotation speed of the engine 1 for the speed change (i.e. the above-described fourth operation of the "double clutch operations"), and if such an accelerator operation is performed, the engine stop control is suspended so that the engine 1 is not stopped. In this way, the engine stop control is suspended according to the driver's intention, thereby the speed change by the "double clutch operations" can be performed smoothly, without interruption, so as to ensure speed change responsiveness.

In the above-described embodiment, the stepping operation and the releasing operation of the stepped clutch pedal 7 are detected by the pedal upper switch 72 and the pedal lower switch 73. However, the present invention should not be limited thereto. The amount of the stepping of the clutch pedal 7 may be detected using a stroke sensor and the like.

In the above-described embodiment, the shift position sensor 502 is provided to detect a shift position of the shift lever 501. Thus, the shift position sensor 502 detects that the shift lever 501 is moved to the neutral position P2. However, the present invention should not be limited thereto. A neutral switch and the like may detect that the shift lever 501 is moved to the neutral position P2. The neutral switch has, for example, a configuration to output a signal "ON" when the shift lever 501 is moved to the neutral position P2, and output a signal "OFF" when the shift lever 501 is moved to a position other than the neutral position P2.

In the above-described embodiment, the timer of the ECU 8 is started at the time when the third operation (operation to put the clutch 30 into the engaged state) is completed so as to determine whether or not the waiting time period T1 elapses. However, the present invention should not be limited thereto. The timer of the ECU 8 may be started at the time when the second operation (operation to put the gear stage of the manual transmission 2 into the neutral state) is completed.

In the above-described embodiment, the description is given on control of the FR (front-engine rear-wheel-drive) vehicle to which the present invention is applied. However, the present invention should not be limited thereto. The present invention may be applied to control of various vehicles such as an FF (front-engine front-wheel-drive) vehicle, and 4WD (four-wheel-drive) vehicle.

### [Industrial Applicability]

The present invention is suitable for use in a vehicle on which mounted an engine, a manual transmission and a clutch that is provided between the engine and the manual transmission and that is capable of shifting between an engaged state and a disengaged state, the vehicle controlling an engine stop during travel.

### [Description of Reference Numerals]

- 1: Engine
- 2: Manual transmission
- 3: Clutch device
- 30: Clutch mechanism
- 300: Clutch actuating device
- 5: Shift device
- 501: Shift lever
- 6: Accelerator pedal
- 7: Clutch pedal
- 8: ECU
- T1: Waiting time period

## Claims

1. A vehicle control device being applied to a vehicle on which an engine (1), a manual transmission (2) and a clutch (30) provided between the engine (1) and the manual transmission (2) are mounted, the clutch (30) being capable of switching a disengaged state and an engaged state, the vehicle control device comprising:
an engine stop unit (8) controlling an engine stop during travel of the vehicle,
wherein the engine stop unit (8) performs the engine stop during travel of the vehicle when a prescribed waiting time period elapses after sequential execution, during travel of the vehicle, of an operation to put the clutch (30) into the disengaged state, an operation to put a gear stage of the manual transmission (2) into a neutral state and an operation to put the clutch (30) into the engaged state, and **characterized in that**, when an operation speed to put the clutch (30) into the disengaged state is high, the waiting time period is set to be longer than the waiting time period when the operation speed is low.

2. The vehicle control device according to claim 1, wherein the engine stop unit (8) suspends engine stop control if a suspending condition for suspending the engine stop control is satisfied before the elapse of the waiting time period.

3. The vehicle control device according to claim 2, wherein the suspending condition is a stepping operation of an accelerator pedal (6).

4. The vehicle control device according to claim 2, wherein the suspending condition is a stepping operation of a clutch pedal (7).

5. The vehicle control device according to any one of claims 1 to 4, wherein, when an operation speed to put the gear stage of the manual transmission (2) into the neutral state is high, the waiting time period is set to be longer than the waiting time period when the operation speed is low.

6. The vehicle control device according to any one of claims 1 to 5, wherein, when an operation speed to put the clutch (30) into the engaged state is high, the waiting time period is set to be longer than the waiting time period when the operation speed is low.

7. The vehicle control device according to any one of claims 1 to 6, wherein, when a vehicle speed is low, the waiting time period is set to be longer than the waiting time period when the vehicle speed is high.

## Patentansprüche

1. Fahrzeugsteuervorrichtung, die in einem Fahrzeug angewendet wird, in dem eine Maschine (1), ein manuelles Getriebe (2) und eine Kupplung (30), die sich zwischen der Maschine (1) und dem manuellen Getriebe (2) befindet, eingebaut sind, wobei die Kupplung (30) in der Lage ist, zwischen einem ausgerückten Zustand und einem eingerückten Zustand umzuschalten, wobei die Fahrzeugsteuervorrichtung aufweist:
eine Maschinenstoppeinheit (8), die einen Maschinenstopp während der Fahrt des Fahrzeugs steuert,
wobei die Maschinenstoppeinheit (8) den Maschinenstopp während der Fahrt des Fahrzeugs durchführt, wenn eine vorgegebene Wartezeit nach sequentieller Ausführung eines Vorgangs, die Kupplung (30) in den ausgerückten Zustand zu versetzen, eines Vorgangs, eine Getriebestufe des manuellen Getriebes (2) in einen neutralen Zustand zu versetzen, und eines Vorgangs, die Kupplung (30) in den eingerückten Zustand zu versetzen, während der Fahrt des Fahrzeugs verstreicht, und
**dadurch gekennzeichnet, dass**,
wenn eine Vorgangsgeschwindigkeit, die Kupplung (30) in den ausgerückten Zustand zu versetzen, hoch ist, die Wartezeitdauer so eingestellt wird, dass sie länger ist als die Wartezeitdauer, wenn die Vorgangsgeschwindigkeit niedrig ist.

2. Fahrzeugsteuervorrichtung nach Anspruch 1, wobei die Maschinenstoppeinheit (8) die Maschinenstoppsteuerung aussetzt, falls eine Aussetzbedingung für das Aussetzen der Maschinenstoppsteuerung erfüllt wird, bevor die Wartezeitdauer verstrichen ist.

3. Fahrzeugsteuervorrichtung nach Anspruch 2, wobei die Aussetzbedingung ein Tretvorgang eines Gaspedals (6) ist.

4. Fahrzeugsteuervorrichtung nach Anspruch 2, wobei die Aussetzbedingung ein Tretvorgang eines Kupplungspedals (7) ist.

5. Fahrzeugsteuervorrichtung nach einem der Ansprüche 1 bis 4, wobei, wenn eine Vorgangsgeschwindigkeit, mit der die Getriebestufe des manuellen Getriebes (2) in den Neutralzustand versetzt wird, hoch ist, die Wartezeitdauer so eingestellt wird, dass sie länger ist als die Wartezeitdauer, wenn die Vorgangsgeschwindigkeit niedrig ist.

6. Fahrzeugsteuervorrichtung nach einem der Ansprüche 1 bis 5, wobei, wenn eine Vorgangsgeschwindigkeit, mit der die Kupplung (30) in den eingerückten Zustand versetzt wird, hoch ist, die Wartezeitdauer so eingestellt wird, dass sie länger ist als die Wartezeitdauer, wenn die Vorgangsgeschwindigkeit niedrig ist.

7. Fahrzeugsteuervorrichtung nach einem der Ansprüche 1 bis 6, wobei, wenn eine Fahrzeuggeschwindigkeit niedrig ist, die Wartezeitdauer so eingestellt wird, dass sie länger ist als die Wartezeitdauer, wenn die Fahrzeuggeschwindigkeit hoch ist.

## Revendications

1. Dispositif de commande de véhicule étant appliqué à un véhicule sur lequel un moteur (1), une transmission manuelle (2) et un embrayage (30) placé entre le moteur (1) et la transmission manuelle (2) sont montés, l'embrayage (30) pouvant commuter un état hors de prise et un état en prise, le dispositif de commande de véhicule comprenant :
une unité d'arrêt de moteur (8) commandant un arrêt de moteur pendant l'avance du véhicule,
dans lequel l'unité d'arrêt de moteur (8) réalise l'arrêt du moteur pendant l'avance du véhicule quand une période de temps d'attente prescrite s'écoule après l'exécution séquentielle, pendant l'avance du véhicule, d'une opération pour mettre l'embrayage (30) dans l'état hors de prise, une opération pour mettre un étage d'engrenage de la transmission manuelle (2) dans un état neutre et une opération pour mettre l'embrayage (30) dans l'état en prise, et
**caractérisé en ce que**,
quand une vitesse d'opération pour mettre l'embrayage (30) dans l'état hors de prise est élevée, la période de temps d'attente est réglée pour être plus longue que la période de temps d'attente quand la vitesse d'opération est lente.

2. Dispositif de commande de véhicule selon la revendication 1, dans lequel l'unité d'arrêt de moteur (8) suspend la commande d'arrêt de moteur si une condition de suspension de la commande d'arrêt de moteur est satisfaite avant l'écoulement de la période de temps d'attente.

3. Dispositif de commande de véhicule selon la revendication 2, dans lequel la condition de suspension est une opération d'appui sur une pédale d'accélérateur (6).

4. Dispositif de commande de véhicule selon la revendication 2, dans lequel la condition de suspension est une opération d'appui sur une pédale d'embrayage (7).

5. Dispositif de commande de véhicule selon l'une quelconque des revendications 1 à 4, dans lequel, quand une vitesse d'opération pour mettre l'étage d'engrenage de la transmission manuelle (2) dans l'état neutre est élevée, la période de temps d'attente est réglée pour être plus longue que la période de temps d'attente quand la vitesse d'opération est lente.

6. Dispositif de commande de véhicule selon l'une quelconque des revendications 1 à 5, dans lequel quand une vitesse d'opération pour mettre l'embrayage (30) dans l'état en prise est rapide, la période de temps d'attente est réglée pour être plus longue que la période de temps d'attente quand la vitesse d'opération est lente.

7. Dispositif de commande de véhicule selon l'une quelconque des revendications 1 à 6, dans lequel quand une vitesse de véhicule est lente, la période de temps d'attente est réglée pour être plus longue que quand la période de temps d'attente quand la vitesse de véhicule est élevée.
